# EUROPEAN PATENT SPECIFICATION

(11) **EP 0 272 017 B1**
(45) Date of publication and mention of the grant of the patent: **09.06.1993**
(21) Application number: 87310590.2
(22) Date of filing: 01.12.1987
(51) Int. Cl.: C08F 240/00

(54) **Liquid aliphatic hydrocarbon resins**
Flüssiges, aliphatisches Kohlenwasserstoffharz
Résine liquide à base d'hydrocarbures aliphatiques

(30) Priority: 01.12.1986 US 936409
(43) Date of publication of application: 22.06.1988
(73) Proprietor: EXXON CHEMICAL PATENTS INC., Linden, New Jersey 07036-0710 (US)
(72) Inventor: Hentges, Steven George, Baton Rouge Louisiana 70808 (US)
(74) Representative: Bawden, Peter Charles

(56) References cited:
- EP-A- 0 120 596
- FR-A- 2 320 959
- US-A- 3 813 357
- CHEMICAL ABSTRACTS, vol. 85, 1976, page 48, abstract no. 79011r, Columbus, Ohio, US

## Description

This invention relates to hydrocarbon petroleum resins having excellent tackifying properties in adhesives and in particular to such resins having a light color and a softening point in the liquid range of 0 to 44°C.

### Background of the Invention

Adhesives form a large part of daily activity for everyone, whether in the form of tape used to close a package or secure items together, bandages, envelopes, notepads, diaper tabs or any one of many other products in common use. The key requirements for adhesives are that they should have suitable cohesive and adhesive properties at end use conditions and during application, whether by solvent or bulk casting. Usually these adhesives are prepared from a mixture of resin, copolymer and a plasticizer to soften the adhesive and enhance tack.

Adhesives prepared from blends incorporating these polymers have very good adhesive and strength properties at room temperature and can be processed by conventional melt coating and extrusion techniques because of their good flow characteristics.

Copolymers made from styrene and dienes are widely used in the production of adhesives such as, for example, styrene/isoprene/styrene (SIS), ethylene vinyl acetate (EVA), styrene/butadiene (SB), and styrene/ethylene/butadiene/styrene (SEBS), and the like. All of these copolymers whether formed by polymerization of polymer block or by random polymerization, are blended with tackifying resins in order to form the adhesive.

However, when copolymers are mixed with tackifying resins in order to form adhesives, many requirements and factors are important such as the ease with which the resin is blended with the copolymer and the control of the tack as well as the long term properties of the adhesive. Further, the adhesives industry has increased the demand for low softening point resins and market requirements dictate the desirability of resins which are not only liquid, i.e., softening point 40°C or less, but that are light in color, even a Gardner color of less than 3. However, a resin would be considered to be sufficiently light in color for some applications with a Gardner color of 6 or even 7.

Many attempts have been made to prepare resins having these properties for use in the blending with copolymers to form adhesives, but all have fallen short of the mark in one respect or another.

Other attempts have been made to prepare light color, low softening point aliphatic resins including, for example, the disclosure of U.S. Patent Nos. 3,813,357; 3,692,756; 3,661,870; 3,804,788; 3,853,826; 3,872,064; 4,098,983; 4,038,346; 4,153,771; and 4,189,547.

Petroleum hydrocarbon resins may be obtained by polymerizing, using a Friedel-Crafts catalyst, a petroleum resin feed comprising C₅ and C₆ olefins and diolefins obtained from the cracking of petroleum feedstock and usually subjected to thermal soaking at about 100 to 150°C, a branched chain reactive aliphatic olefin chain transfer agent, and optionally a C₈ to C₁₀ vinyl aromatic compound. The reactive olefin transfer agents are feed additives which in part control the resin molecular weight and narrow the resin molecular weight distribution.

Most aliphatic resins do not provide desired adhesive properties with many copolymers. Other components such as a naphthenic oil are required to impart the tack or other requisite adhesive properties to the adhesive composition. The presence of oil itself can cause detrimental adhesive performance. The low color liquid resins of the present invention solve these problems of the prior art.

Most of the patents mentioned above also relate to the preparation of aliphatic or liquid resins using various feedstocks but preparing the resin by boron trifluoride catalyzed polymerization. It is well established that polymerization with BF₃ results in a substantially different polymer than that which is obtained by aluminum chloride Freidel-Crafts polymerization. U.S. Patent No. 3,853,826 at column 1, lines 32-36 presents a brief discussion of the structural differences between BF₃ and aluminum chloride catalyzed resins. U.S. Patent No. 4,098,983 discloses that the BF₃ polymerization of a piperylene/2-methylbutene feed provides a low softening point resin having a high viscosity. In the same disclosure at column 4, Examples 1 and 2 teach that a similar polymerization with aluminum chloride results in high softening point resins, contrary to the present invention.

U.S. Patent No. 3,692,756 discloses the production of liquid resins and hard resins from blends of C₄ and C₅ olefins and diolefins with aluminum chloride catalysts. This reference teaches the requirement of the presence of a significant portion of butadiene to obtain a liquid resin. In Examples 2 and 5 using low levels of butadiene, a high softening point resin is obtained.

U.S. Patent No. 3,661,870 describes the production of liquid resins derived from butadiene and chain transfer agents with aluminum chloride as catalyst. While piperylene is a possible low level additive, butadiene is required in significant amount.

### Summary of the Invention

The present invention is a liquid aliphatic hydrocarbon resin of light color prepared from piperylene and a chain transfer agent. The resin, containing little or no vinyl aromatic hydrocarbon component and essentially no butadiene component, is especially useful as a tackifier in pressure sensitive adhesives. Accordingly, liquid resins of low Gardner color are prepared from a high concentration of chain transfer agent and a significant portion of piperylene. The resins have low molecular weight and softening point in addition to a low cloud point and narrow molecular weight distribution.

The resin described above has been found to be compatible and produce good pressure sensitive adhesives with many copolymers such as, for example, optionally hydrogenated block copolymer rubbers such as styrene/isoprene/styrene (SIS), ethylene vinyl acetate (EVA), styrene/butadiene (SB), and styrene/ethylene/butadiene/styrene (SEBS), Generally, to prepare the adhesives of this invention, the copolymer is present in amounts from 20% to 80% by weight with the resin and the copolymer is, correspondingly, 80% by weight to 20% by weight of the adhesive, and the balance being optional components as hereinafter mentioned even though such optional materials are well recognized. These properties will vary according to the copolymer involved, and the requirements of that copolymer to provide an adequate adhesive. As optional components, fillers and a hard resin having a softening point of 80°C. or higher can be added in amounts of from 0 to 60% by weight in order to impart additional strength to the final adhesive. Examples of such hard resins could be aliphatic resins, aliphatic/aromatic resins, aromatic resins, terpene resins, terpene aliphatic resins, rosins, rosin derivatives or hydrogenated derivatives of the foregoing resins. These resins are well known to those skilled in preparing adhesives.

Tackifying resins for use in the manufacture of adhesives and having a softening point in the liquid range are polymerized using an aluminum chloride Friedel-Crafts catalyst. The resins are prepared by the catalytic reaction of a petroleum resin feed being predominantly a piperylene diolefin feedstock from steam cracked naphtha or light refinery streams, especially piperylene concentrates or heat soaked piperylene fractions. A chain transfer agent forms the other significant portion of the hydrocarbon feed stream.

### Description of the Preferred Embodiments

An embodiment of the present invention is a petroleum hydrocarbon resin suitable for use as a tackifier in an adhesive composition, said resin having a softening point of 0-44°C, number average molecular weight, Mn of 100-900, Gardner color of 6 or less, and a piperylene-derived content of 5-50 weight percent, said resin being prepared by the aluminum chloride catalyzed Friedel-Crafts polymerization of a hydrocarbon feed comprising:
(a) less than 5 weight percent vinyl aromatic hydrocarbons;
(b) less than 1 weight percent butadiene;
(c) 10-90 weight percent piperylene stream; and
(d) 90-10 weight percent monoolefin chain transfer agent stream.

Another embodiment of the present invention is a petroleum hydrocarbon resin produced by the aluminum chloride catalysed polymerisation of a hydrocarbon feed consisting essentially of 5-40 weight percent piperylene and 95 to 60% of a chain transfer agent, said resin having a softening point of 15-30°C, a Gardner color of 3 or less, a number average molecular weight Mn of 400-700, and a molecular weight distribution of from 1.25-1.35. Preferably the piperylene component is from 30 to 40 wt% of the resin.

The resins of this invention are attractive and functional for use in adhesives since they have both a low softening point and light color in addition to good tack and high compatibility with ethylene vinyl acetate and other copolymers, both block and random. Furthermore, the resins of the present invention are especially functional for use in the pressure sensitive adhesive applications.

In practicing the invention to produce the novel liquid hydrocarbon resins which have been found to provide tackification in many copolymer blends and pressure sensitive adhesives, the feedstock composition is important in order to obtain resins possessing requisite molecular weight and distribution, softening point, and preferred color for a particular use. While the reaction conditions are also important, they may be varied somewhat. The resins of the invention have softening points of from 0-44°C, preferably 15-30°C, more preferably 20°C, and Gardner colors of 6 or less, preferably 3 or less, most preferably 1-2. The resins are formed from a feed wherein the predominant reactive components are, under aluminum chloride polymerization, piperylene and a monoolefinic chain transfer agent.

Each of the chain transfer agent stream and the piperylene stream form 10-90 weight percent of the polymerizable hydrocarbon feed. A piperylene concentrate or substantially pure/100% piperylene may be used. The concentrate may contain as little as 10% piperylene based on the weight of the concentrate. Preferably, the piperylene concentrate is a heat soaked piperylene concentrate. Such concentrates include from 5-95 weight percent piperylene based on the weight of the concentrate, preferably 20-70 weight percent, more preferably 30-50 weight percent. Such a piperylene concentrate typically results from the isolation of a fraction of steam cracked petroleum hydrocarbons which boil between 20°C and 140°C, such a fraction containing diolefins substantially below the 9 carbon atom level. Suitably it contains less than 1 wt% of vinylaromatic hydrocarbons.

The heat soaked piperylenes are well known and described in U.S. Patent No. 4,391,961. Such heat soaked piperylene concentrates impart a lower color to the resulting resins. The concentrates, while containing hydrocarbons which do not enter into the resin-forming reaction, are nevertheless valuable for forming low color liquid resins. The nonreactive materials normally do no harm to the resins and, during reaction, act as a diluent which is removed after resin is recovered.

The monoolefinic chain transfer agent stream of the present invention usually contains C₄-C₈ monoolefins, preferably of the general formula RR'C=CR''R''' where R and R' are C₁ to C₅ alkyl, and R'' and R''' are H or a C₁-C₄ alkyl group. Useful chain transfer agents include isobutene, isoamylenes, isohexenes and diisobutenes. The particularly useful isoamylenes are described in U.S. Patent No. 4,514,554. The chain transfer agents are usually concentrates or mixtures containing various desired isomers from distillation cuts, well known to those skilled in the art. Mixtures may also be prepared from pure compounds. Also known and useable are substantially pure isoolefins (e.g., isobutylene or isoamylene). Also useful are longer chain monoolefins other than those of C₄-C₈ but having the formula RR'C=CR''R'''.

The chain transfer agent stream of the invention may be any of the substantially pure or concentrated streams described herein or known to the skilled artisan. The chain transfer agent stream comprises 10-90 weight percent of the hydrocarbon feed of the aluminum chloride catalyzed Friedel-Crafts polymerization of the invention. Preferably, the chain transfer agent stream of the hydrocarbon feed contains sufficient chain transfer agent so that the chain transfer agent comprises 10-50 weight percent of the hydrocarbon feed.

Where a chain transfer agent stream is a concentrate, it preferably contains 20-100% chain transfer agent, more preferably 30-100%. It is recognized that high purity chain transfer agent streams, where available, require less processing throughput than low purity streams since fewer nonreactants are present.

Various hexene and other C₆ compositions are also useful. A particularly useful chain transfer agent for preparation of resins according to the invention contains isohexene isomers resulting from the dimerization of propylene in the well known "Dimersol" process (Registered Trade Mark) which uses a nickel coordination complex and an aluminum alkyl as the catalyst system. The process is capable of converting propylene to hexenes with a selectivity in excess of 85%. The Dimersol dimerization process has been referred to in various publications including "How First Dimersol Is Working" by Benedek et al., Hydrocarbon Processing, May 1980, Page 143; as well as in "The IFP Dimersol Process For the Dimerization of C₃ and C₄ Olefinic Cuts" by Chauvin et al., Advances in Petroleum Technology presented at the American Institute of Chemical Engineers, April 13, 1976, Kansas City, Missouri.

Thus, a preferred chain transfer agent according to the invention is that product stream obtained from the selective dimerization of propylene with a transition metal catalyst. This dimerization stream even as a crude product has been discovered to perform as a satisfactory chain transfer agent. This chain transfer agent is characterized as having medium chain length (C₆-C₉) olefins derived from a selective dimerization of propylene. Suitably the dimerization reaction product stream contains from 12 to 18 wt% of C₉ propylene trimer. By selective, we mean that the process normally converts propylene to a mixture of hexenes with a selectivity of 85%. The chain transfer agent is characterized by being composed mainly of internal olefins, having a linear content of from 20% to 32% by weight. The main reactive isomer present is 2-methyl-2-pentene, along with other 2- and 4-methylpentenes and around 6% 2,3-dimethyl-2-butene. It is known that certain of these hexenes, particularly the linear species and those such as the 4-methyl-2-pentene species do not function as a chain transfer agent and are generally unreactive in the polymerization reaction. Higher molecular weight reaction products such as a C₉ olefin are usually present in amounts of 12-18 weight percent. Usually chain transfer agents comprise only about one-third of the stream (by weight).

To illustrate the species included in a product stream obtained from the above mentioned selective dimerization of propylene, a typical analysis follows:

| Component | Weight % |
|---|---|
| 4-Methyl-1-pentene | 1.2 |
| 2,3-Dimethyl-1-butene | 2.8 |
| cis-4-Methyl-2-pentene | 3.9 |
| trans-4-Methyl-2-pentene | 25.2 |
| 2-Methyl-1-pentene | 3.9 |
| trans-3-Hexene | 3.9 |
| trans-2-Hexene | 10.6 |
| 2-Methyl-2-pentene | 25.8 |
| cis-2-Hexene | 4.7 |
| 2,3-Dimethyl-2-butene | 2.7 |
| unknown | 1.1 |
| C₉ | 14.2 |

The selective dimerization of propylene not only results in a product which is a useful chain transfer agent but also imparts very narrow molecular weight distribution, good color, and good end use properties to the formed resins.

Depending upon the dimerization process reaction conditions, the useful mixtures of the selective dimerization of propylene may vary. The hexene fraction may be distilled to remove propylene trimer and provide a distribution of hexenes as shown below: Hexene Distribution from Propylene Dimerization

| Component | Range Weight % |
|---|---|
| 4-Methyl-1-pentene | 0.5 - 2 |
| 2,3-Dimethyl-1-butene | 1 - 4 |
| cis-4-Methyl-2-pentene | 2.5 - 5 |
| trans-4-Methyl-2-pentene | 15 - 30 |
| 2-Methyl-1-pentene | 4 - 6 |
| trans-3-Hexene | 4 - 7 |
| trans-2-Hexene | 12 - 18 |
| 2-Methyl-2-pentene | 25 - 40 |
| cis-2-Hexene | 4 - 7 |
| 2,3-Dimethyl-2-butene | 3 - 7 |

Although pure compounds and isomers making up the previously mentioned monoolefin chain transfer agent streams are useful, it is within the scope of the present invention to use mixtures of isomers and reaction products containing such isomers in the practice of the invention, with the isohexenes produced by selective dimerization being preferred.

The polymerization reaction is carried out by bringing the hydrocarbon mixture into contact with a catalyst containing aluminum chloride, anhydrous aluminum chloride being preferred. The catalyst is preferably used in a particulate form with a particle size in the range of 5-200 mesh although larger or smaller particles may be used. The amount of catalyst used ranges from 0.5-2 weight percent, preferably 1-2 weight percent although larger amounts may be used without ill effects. The catalyst may be added to the hydrocarbon mixture or an inverse procedure may be used. The reaction can be conducted continuously or by batch process techniques generally known to those skilled in the art.

The reaction may be carried out at any pressure which results in production of a low molecular weight liquid resin from the components of the invention. A suitable range for reaction pressures is 0.7-5.6 kg/cm², (10-80 psi) preferably 1.4 kg/cm² (20 psi). The reaction temperature may be any suitable range resulting in the polymerization of a resin of suitable molecular weight, low color, and tackifier properties according to the invention from the hydrocarbon feed stream of the invention. A suitable reaction temperature range is 20-100°C, preferably 30-60°C, more preferably 35-50°C. The polymerization time usually varies from 1/4-2 hours, preferably 20 minutes to 1 hour.

The reaction is conveniently carried out in the presence of a diluent because the reaction is usually exothermic and the resulting product is viscous. With adequate mixing and cooling, the temperature can be controlled and the reaction may be conducted with only sufficient diluent to maintain good heat transfer from the heat of polymerization. The diluent may be introduced as an integral component of the feed stock streams where concentrates, reaction mixtures, or distillation fractions are used, but various other diluents which are inert in that they do not enter into the polymerization reaction may also be added separately. Representative examples of inert diluents are aliphatic hydrocarbons such as pentane, hexane, heptane, and nonreactive aromatic hydrocarbons such as xylene, toluene, and benzene as well as unreacted residual hydrocarbons from the reaction.

After polymerization is complete, the catalyst is quenched by well known means, usually addition of water and alcohol solution followed by resin recovery. The recovery step is usually carried out by heating to 250°C to remove unreacted hydrocarbons/diluent (raffinate) followed by steam stripping to remove low molecular weight oligomers (fill). The degree of stripping can be varied somewhat as desired to make small adjustments to the softening point. The raffinate removed may be saved and used as diluent for subsequent polymerizations.

The resins of the invention contain and are formed from hydrocarbon feed streams containing less than 5 weight percent reactive aromatic hydrocarbons preferably less than three weight percent, and most preferably less than one weight percent aromatic hydrocarbons. Typical diluent aromatic hydrocarbons such as toluene and benzene do not react in the polymerization process. Vinyl aromatic hydrocarbons and similar reactive species do not form a significant portion of the resin of the present invention and their presence in the hydrocarbon feed stream is minimized.

The resins of the present invention are based on piperylene and not butadiene. Accordingly, the resins contain essentially no butadiene component and the hydrocarbon feed stream contains less than 1 weight percent butadiene.

The monoolefinic chain transfer agent of the hydrocarbon feed stream for preparing the resin of the invention is preferably present in 10-50 weight percent based on the total weight of the feed stream. Also preferably, at least 40-70 weight percent of the resin is formed of this chain transfer agent component and accordingly the feed stream preferably contains such a proportion. In some embodiments of the resin of the invention, up to 30 weight percent may be derived from olefins other than piperylene and chain transfer agents.

The resins of the invention are liquid having a softening point as determined by ASTM Method E-28 modified for liquid resins. A preferred and more useable softening point range is 15-30°C. Still more preferred is 20°C.

The resins of the invention have a Gardner color of 6 or less, preferably 3 or less, and most preferably 1-2. The light colors of the resins of the invention are highly desirable since industry demands low Gardner color resins for applications in pressure sensitive adhesives and the products where adhesive compositions are used.

The resins of the invention have a number average molecular weight Mn of 100-900, preferably 400-700, more preferably from 500 to 600. The resins have a weight average molecular weight of 100-900, preferably 500-800, more preferably 700. The molecular weight distribution may vary accordingly but is preferably 1.25 to 1.35.

The light color liquid aliphatic resins of the invention can readily be prepared from the foregoing description and the following examples. Those skilled in preparing adhesives from petroleum hydrocarbon resins will be able to incorporate same with copolymer and in pressure sensitive adhesive compositions. The invention is further described by the following examples which are offered by way of explanation and for the purpose of guiding those skilled in the art to practice the invention and the broadening of its usefulness and not for purposes of limitation.

### Examples 1-6

The aliphatic liquid resins of these examples were polymerized batchwise using aluminium chloride as catalyst in a nitrogen atmosphere at 0.7 kg/cm² (10 psig). The aluminium chloride catalyst of particle size 5-200 mesh was added in anhydrous form and 400 grams of the feedblends in the proportions indicated in Table 1 were pumped into the closed, stirred reactor containing the catalyst over a period of 30 minutes. The reaction mixtures were left in contact with the catalyst for an additional 30 minutes with stirring. Thereafter, a 400 gram 1:3 solution of isopropanol:water was added to the reaction mixture to quench the catalyst and the polymerizate was water washed 2 to 3 additional times with the aqueous phase being separated after each wash.

The resin recovery step was carried out by heating to 250°C with a nitrogen sparge to remove raffinate followed by steam stripping to remove fill and produce the finished resin. In Examples 1-6, the following heat soaked piperylene concentrate was used:

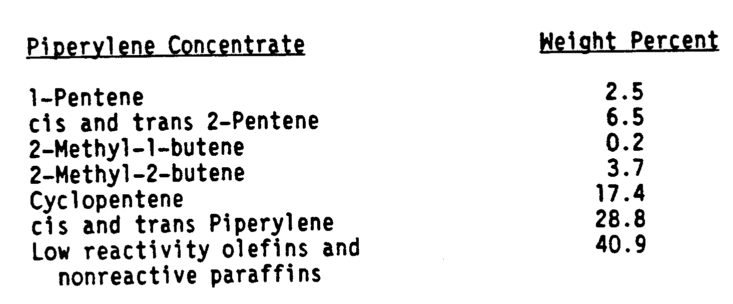

In Examples 1-5, a product of the Dimersol propylene dimerization process was used as the chain transfer agent and had the composition given below:

| Component | Weight % |
|---|---|
| 2-Methyl-1-pentene | 3.9 |
| 2-Methyl-2-pentene | 25.9 |
| 2,3-Dimethyl-1-butene | 2.8 |
| 2,3-Dimethyl-2-butene | 2.7 |
| Other C₆ olefins | 50.5 |
| C₉ olefins | 14.2 |
| *"Dimate", (Registered Trade Mark) from Diamond Shamrock, produced by dimerization of propylene. | |

In Example 6, a UOP hexene stream was used in place of the Dimersol process propylene dimer product. The composition of the hexene stream for Example 6 was as given below:

| Component | Weight % |
|---|---|
| 4-Methyl-1-pentene | 0.8 |
| 2,3-Dimethyl-1-butene | 1.6 |
| cis-4-Methyl-2-pentene | 8.9 |
| trans-4-Methyl-2-pentene | 3.1 |
| 2-Methyl-1-pentene | 5.2 |
| 1-Hexene | 0.5 |
| trans-3-Hexene | 2.7 |
| trans-2-Hexene | 5.1 |
| 2-Methyl-2-pentene | 18.2 |
| cis-3-Methyl-2-pentene | 9.1 |
| cis-2-Hexene | 2.2 |
| 2,3-Dimethyl-2-butene | 1.5 |
| trans-3-Methyl-2-pentene | 6.5 |
| Low reactivity olefins and nonreactive paraffins | 34.6 |

The Table gives the reaction conditions and properties of the finished resin for the process described above.

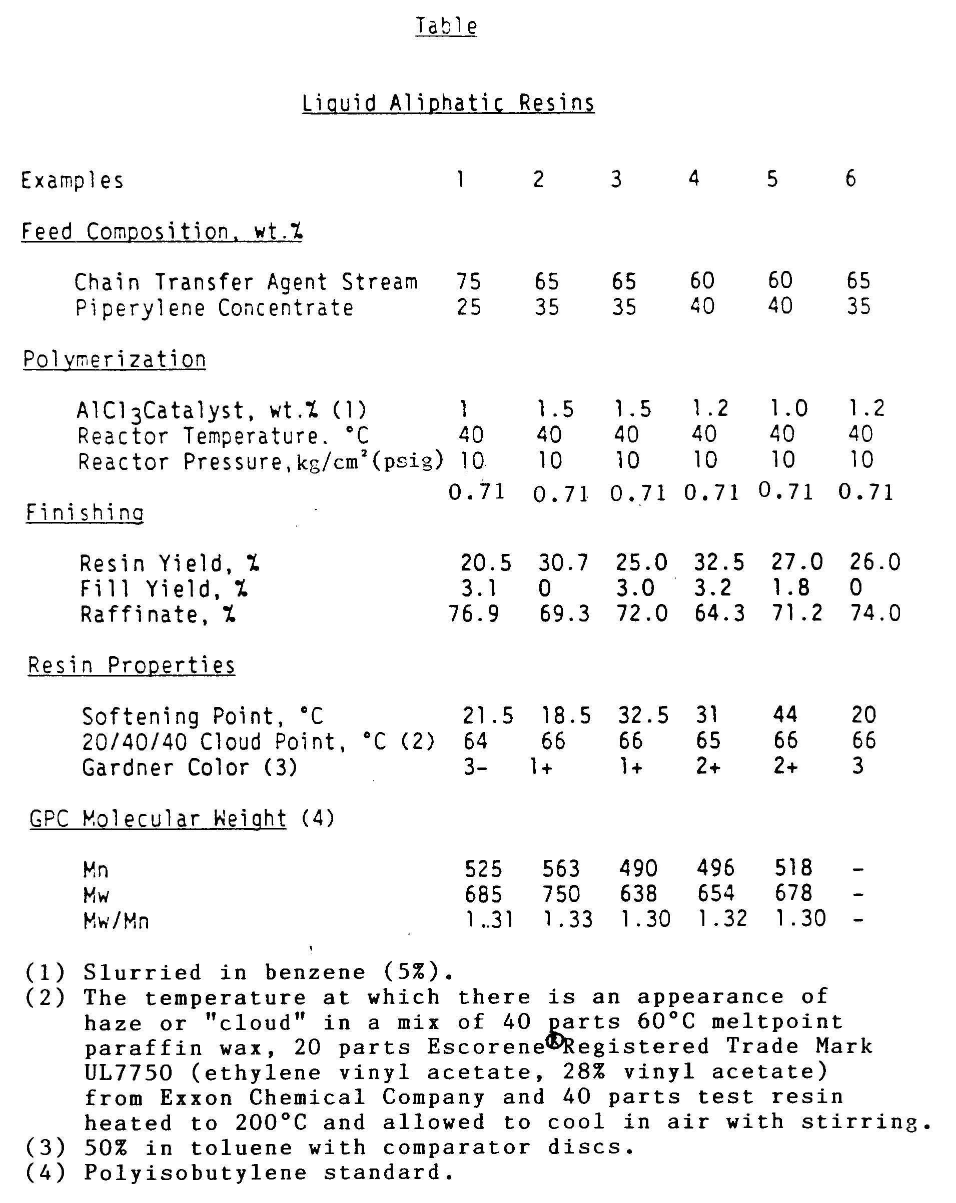

The low softening point liquid resins described above are all applicable in the practice of the instant invention to make adhesives when combined with a copolymer. The copolymers useful for the practice of this invention are generally known as, for example. Styrene/isoprene/styrene (SIS), ethylene vinyl acetate (EVA) (from 25% to 45% by weight vinyl acetate), styrene/butadiene (SB) or styrene/ethylene/butadiene/styrene (SEBS). Of particular interest are the styrene/butadiene copolymers which are classically more difficult to tackify than other polymers using a resin and often require not only a tackifier but an oil to act as a plasticizer thus giving rise to the problem of "bleed" and/or "creep" when the adhesive is applied to a paper or polymer substrate. When the need is for a light color, essentially water white resin, previously only resins prepared from nonaromatic materials were available since aromaticity had heretofore imparted color to the resin which was unacceptable for certain applications, including premium packaging and disposable diapers. The presence of an oil in the adhesive composition has other detrimental effects such as unacceptable creep and bond release along a polyethylene film, particularly in a case where disposable diapers are involved. Thus, the resins described above can be used with styrene/butadiene resins in a binary system, i.e., by eliminating the plasticizer are particularly useful.

Well known styrene/butadiene copolymers useful in the practice of this invention are those sold by shell under the "Kraton" trademark and by Firestone under the "Stereon" trademark. Both of these are styrene/butadiene copolymers which form particularly attractive adhesives when used in combination with the above-identified resins, particularly the very low color resins having a softening point of around 20°C. The "Stereon" copolymer grade 840A is a copolymer containing 42% styrene. In formulating the adhesive, the liquid resin is present in amounts from 20% to 80% by weight with the copolymer which is present in, correspondingly, 80% to 20%. The preferred adhesive would contain from 30% to 70% by weight of the resins with from 35% to 50% by weight in the adhesive being especially preferred. In binary adhesives, the copolymer will be present in corresponding amounts. However, other components may be present. Optionally, a resin having a higher softening point, from 80°C. to 120°C., may be used as an additional component of the adhesive composition. While the preferred adhesive is a binary system comprising two reactants, the copolymer and the light color resins described herein, such binary system may still include such nonreactive ingredients as fillers and, inhibitors. Representative of fillers would be, for example, calcium carbonate, titanium oxides, finely divided clays or, talc.

Once blended using methods and techniques well known to those skilled in the art, the adhesive would be coated on a substrate such as "Mylar" film (Registered Trade Mark; DuPont Company) or "Endura" film (Registered Trade Mark; Akrosil). The adhesive is then evaluated in terms of those parameters important to adhesives such as rolling ball tack, polyken tack, peel strength, holding power and aged retention of these properties.

The adhesive compositions of the present invention may be applied to a substrate and, if solvent coated, dried using conventional procedures. The substrate used depends upon the anticipated use, but it is usually relatively thin material, usually no greater than about 3.2 mm in thickness, and in the manufacture of tapes and labels, the substrate is a relatively thin sheet material. The sheet material may be a polymeric material which is flexible at about room temperature. The sheet material may be a homo-polymer of an ethylenically unsaturated monomer such as ethylene, propylene or vinyl chloride, or be polyester, polyacetate or polyamide provided it has sufficient flexibility for the desired end use. Alternatively, the substrate may be made from cellulosic or reconstituted cellulosic material such as rayon. The substrate need not be a sheet material but may be composed of fibers which may be woven, or nonwoven as is the case in paper, woven substrates may be made from cellulosic material, such as cotton or from fibers of any of the above mentioned polymers.

The composition is applied to the substrate using conventional coating techniques such as roller coaters, blade coaters, meyer rods or air coaters. The coated substrate can be dried usually by passing it through a heating tunnel or oven through which may be circulating hot air or the tunnel or oven may contain infrared lamps to dry the coated substrate. The drying time will be a function of a number of factors such as the heat capacity of the substrate, the type of heating, the oven temperature, air velocities (if circulating air is used) and the rate of passage of the substrate through the heater.

The substrate should be coated with sufficient composition to provide a dry coat weight from 16 to 57 g/cm². Generally in the manufacture of tapes using a continuous sheet polymeric substrate, a dry coat weight of 15-30 g/cm² is used. In the manufacture of labels, a dry coat weight from 15 to 30 g/cm² is usually used. In the manufacture of masking tape, a dry coat weight from 35 to 65 g/cm² is usually used.

After drying, the coated substrate is cut to the required dimension. In the manufacture of tape, the substrate is cut into strips and rolled to provide a finished product. The substrate may also be cut into shaped items to provide labels or medicinal tapes.

One particularly attractive use for the pressure sensitive adhesives of the present invention is in diaper tabs for disposable diapers, particularly repositional tabs which employ a "Mylar" polymer substrate coated as stated above with 0.038 mm (1.5 mil) adhesive.

The mechanical preparation of the adhesives of this invention are well known to those skilled in the art. In additional to the components which make up the adhesives of this invention, i.e., the copolymers and the low softening, light color resin described above, other materials, well known to those skilled in the art may be added without departing from the invention such as, for example, fillers or resins having higher melting points such as, for example, from 80°C. to 120°C. in order to impart additional strength to the resulging pressure sensitive adhesive. In some applications, it may be desirable to add up to 60 weight percent of such "hard" resin such as that described in U.S. Pat. No. 4,514,554 for example, and U.S. Pat. No. 4,391,961. Both provide often desirable modifications of the pressure sensitive adhesive of this invention.

Preferred adhesives made with a styrene/butadiene copolymer having from 40% to 50% styrene are preferred. In use, the adhesives are applied to a polyacetate or cellulose backing in a thickness of from 0.018 to 0.038 mm (0.7 to 1.5 mil).

Using the feed blend of Example 6 and a catalyst loading of 1 wt. %, the resin produced had a softening point of 12°C.

In each of the following formulations, the adhesive blend was prepared as a 45% solution in toluene and coated on a mylar substrate to achieve a 1.5 mil thickness of adhesive after removal of toluene. The blends could also have been prepared as hot melts, with no solvent, and coated on mylar to the same thickness.

| Blend | A | | B | | C | |
|---|---|---|---|---|---|---|
| Composition, phr | Kration (Registered Trade Mark) 1657 | 100 | Kraton 1107 | 100 | Stereon (Registered Trade Mark 840A | 100 |
| | Escorez 5380 | 125 | Escorez 1310LC | 100 | Escorez 2393 | 125 |
| | ECR-143 | 70 | ECR-143 | 30 | ECR-143 | 70 |
| | Antioxidant | 2 | Antioxidant | 2 | Antioxidant | 2 |

The following properties were determined:

| Blend | A | B | C |
|---|---|---|---|
| Adhesive Properties | | | |
| - Rolling ball tack, cm | 12 | 3 | 30 |
| - SAFT, °F | 147 | 198 | 150 |
| - Peel strength to SS, lbs/in | 2.4 (429) | 4.0 (714) | 4.0 (714) |
| - Quick stick, lbs/in | 1.0 (179) | 2.6 (464) | 2.7 (482) |
| Values in brackets are the equivalent values to Lbs/in expressed in g/cm. | | | |

## Claims

1. A petroleum hydrocarbon resin having a softening point of 0-44°C., a number average molecular weight Mn of 100 to 900, a Gardner color of 6 or less, and a piperylene-derived content of 5-50 weight percent, said resin being prepared by the aluminum chloride catalyzed Friedel-Crafts polymerization of a hydrocarbon feed comprising:
(a) less than 5 weight percent vinyl aromatic hydrocarbons;
(b) less than 1 weight percent butadiene;
(c) 10-90 weight percent piperylene stream; and
(d) 90-10 weight percent monoolefin chain transfer agent stream.

2. The resin of claim 1 wherein said monoolefin chain transfer agent is of the formula RR'=CR''R''' where R and R' are C₁-C₅ alkyl and R'' and R''' are H or a C₁-C₄ alkyl.

3. The resin of claim 1 or claim 2 wherein said chain transfer agent comprises the reaction product stream of medium chain length olefins derived from the selective dimerization of propylene.

4. The resin of claim 3 wherein the propylene is dimerized in the presence of a transition metal catalyst.

5. The resin of claim 3 or claim 4 wherein said dimerization reaction product stream contains from 12-18 weight percent C₉ propylene trimer.

6. The resin of any of claims 3 to 5 wherein the dimerization reaction product chain transfer agent has the following analysis on a C₉ trimer-free basis:
| Component | Range Weight % |
|---|---|
| 4-Methyl-1-pentene | 0.5 - 2 |
| 2,3-Dimethyl-1-butene | 1 - 4 |
| cis-4-Methyl-2-pentene | 2.5 - 5 |
| trans-4-Methyl-2-pentene | 15 - 30 |
| 2-Methyl-1-pentene | 4 - 6 |
| trans-3-Hexene | 4 - 7 |
| trans-2-Hexene | 12 - 18 |
| 2-Methyl-2-pentene | 25 - 40 |
| cis-2-Hexene | 4 - 7 |
| 2,3-Dimethyl-2-butene | 3 - 7 |

7. The resin according to any of the preceding claims wherein chain transfer agent is present in said hydrocarbon feed at 10-50 weight percent based on the weight of said hydrocarbon feed.

8. The resin according to any of the preceding claims wherein said piperylene stream is a heat soaked piperylene concentrate.

9. The resin of claim 8 wherein said heat soaked piperylene concentrate contains 20-70 weight percent piperylene based on the weight of said concentrate.

10. The resin according to any of the preceding claims wherein said hydrocarbon feed contains less than 1 weight percent vinyl aromatic hydrocarbons.

11. A petroleum hydrocarbon resin produced by the aluminum chloride catalysed polymerisation of a hydrocarbon feed consisting essentially of 5-40 weight percent piperylene and 95 to 60% of a chain transfer agent copolymerizable with piperylene, said resin having a softening point of 0 to 44°C, preferably of 15-30°C, a Gardner color of 3 or less, a number average molecular weight Mn of 400 to 700, and a molecular weight distribution of from 1.25 to 1.35.

12. The resin of claim 11 wherein said piperylene component is 30-40 weight percent of the resin.

13. The resin of claim 11 or claim 12 having a Gardner color of 1-2.

14. The resin of claims 11 to 13 having a softening point of 20°C, a Mn of 500-600, and a molecular weight distribution of from 1.25 to 1.35.

15. The use of a petroleum resin according to any of the preceding claims as a tackifier in an adhesive formulation.

16. An adhesive formulation comprising 20% to 80% by weight of a polymer and from 80% to 20% by weight of a tackifier, said tackifier being a hydrocarbon resin having a softening point of 0-44°C, a number average molecular weight Mn of 100 to 900, a Gardner color of 6 or less, and a piperylene-derived content of 5-50 weight percent, said resin being prepared by the aluminum chloride catalyzed Friedel-Crafts polymerization of a hydrocarbon feed comprising:
(a) less than 5 weight percent vinyl aromatic hydrocarbons;
(b) less than 1 weight percent butadiene;
(c) 10-90 weight percent piperylene stream; and
(d) 90-10 weight percent monoolefin chain transfer agent stream.

17. An adhesive formulation according to claim 16 in which the resin is a petroleum hydrocarbon resin produced by the aluminum chloride catalysed polymerisation of a hydrocarbon feed comprising 5-40 weight percent piperylene and 95 to 60% of a chain transfer agent copolymerizable with piperylene, said resin having a softening point of 15-30°C, a Gardner color of 3 or less, a number average molecular weight Mn of 400 to 700, and a molecular weight distribution of from 1.25 to 1.35.

18. An adhesive formulation according to claim 16 or claim 17 in which the polymer is a block copolymer rubber.

19. An adhesive formulation according to claim 18 in which the block copolymer rubber is hydrogenated.

## Patentansprüche

1. Erdölkohlenwasserstoffharz, das einen Erweichungspunkt von 0 bis 44°C, ein durchschnittliches Molekulargewicht (Zahlenmittel) Mₙ von 100 bis 900, eine Gardner-Farbe von 6 oder weniger und einen von Piperylen abgeleiteten Gehalt von 5 bis 50 Gew.% hat, wobei das Harz durch die mit Aluminiumchlorid katalysierte Friedel-Crafts-Polymerisation eines Kohlenwasserstoffeinsatzmaterials, das
(a) weniger als 5 Gew.% vinylaromatische Kohlenwasserstoffe;
(b) weniger als 1 Gew.% Butadien;
(c) 10 bis 90 Gew.% Piperylenstrom und
(d) 90 bis 10 Gew.% Monoolefinkettenübertragungsmittelstrom
umfaßt, hergestellt worden ist.

2. Harz nach Anspruch 1, bei dem das Monoolefinkettenübertragungsmittel die Formel RR'=CR''R''' aufweist, wobei R und R' C₁ bis C₅-Alkyl sind und R'' und R''' Wasserstoff oder C₁ bis C₄-Alkyl sind.

3. Harz nach Anspruch 1 oder Anspruch 2, bei dem das Kettenübertragungsmittel den Reaktionsproduktstrom von Olefinen mit mittlerer Kettenlänge umfaßt, die von der selektiven Dimerisierung von Propylen abgeleitet sind.

4. Harz nach Anspruch 3, bei dem das Propylen in Gegenwart eines Übergangsmetallkatalysators dimerisiert worden ist.

5. Harz nach Anspruch 3 oder Anspruch 4, bei dem der Dimerisierungsreaktionsproduktstrom 12 bis 18 Gew.% C₉-Propylen-Trimer enthält.

6. Harz nach einem der Ansprüche 3 bis 5, bei dem das Dimerisierungsreaktionsprodukt-Kettenübertragungsmittel die folgende Analyse auf einer C₉-Trimer-freien Basis ergibt:
| Komponente | Bereich, Gew.% |
|---|---|
| 4-Methyl-1-penten | 0,5 - 2 |
| 2,3-Dimethyl-1-buten | 1 - 4 |
| cis-4-Methyl-2-penten | 2,5 - 5 |
| trans-4-Methyl-2-penten | 15 - 30 |
| 2-Methyl-1-penten | 4 - 6 |
| trans-3-Hexen | 4 - 7 |
| trans-2-Hexen | 12 - 18 |
| 2-Methyl-2-penten | 25 - 40 |
| cis-2-Hexen | 4 - 7 |
| 2,3-Dimethyl-2-buten | 3 - 7 |

7. Harz nach einem der vorhergehenden Ansprüche, bei dem das Kettenübertragungsmittel in dem Kohlenwasserstoffeinsatzmaterial zu 10 bis 50 Gew.%, bezogen auf das Gewicht des Kohlenwasserstoffeinsatzmaterials, vorhanden ist.

8. Harz nach einem der vorhergehenden Ansprüche, bei dem der Piperylenstrom ein Piperylenkonzentrat ist, das wärmebehandelt worden ist.

9. Harz nach Anspruch 8, bei dem das Piperylenkonzentrat, das wärmebehandelt worden ist, 20 bis 70 Gew.% Piperylen, bezogen auf das Gewicht des Konzentrats, enthält.

10. Harz nach einem der vorhergehenden Ansprüchen, bei dem das Kohlenwasserstoffeinsatzmaterial weniger als 1 Gew.% vinylaromatische Kohlenwasserstoffe enthält.

11. Erdölkohlenwasserstoffharz, das durch die mit Aluminiumchlorid katalysierte Polymerisation eines Kohlenwasserstoffeinsatzmaterials hergestellt worden ist, das im wesentlichen aus 5 bis 40 Gew.% Piperylen und 95 bis 60 % eines Kettenübertragungsmittels besteht, das mit Piperylen copolymerisierbar ist, wobei das Harz einen Erweichungspunkt von 0 bis 44°C, vorzugsweise von 15 bis 30°C, eine Gardner-Farbe von 3 oder weniger, ein durchschnittliches Molekulargewicht (Zahlenmittel) Mₙ von 400 bis 700 und eine Molekulargewichtsverteilung von 1,25 bis 1,35 hat.

12. Harz nach Anspruch 11, bei dem die Piperylenkomponente 30 bis 40 Gew.% des Harzes ausmacht.

13. Harz nach Anspruch 11 oder Anspruch 12, das eine Gardner-Farbe von 1 bis 2 hat.

14. Harz nach Anspruch 11 bis 13, das einen Erweichungspunkt von 20°C, ein Mₙ von 500 bis 600 und eine Molekulargewichtsverteilung von 1,25 bis 1,35 hat.

15. Verwendung eines Erdölharzes nach einem der vorhergehenden Ansprüche als ein klebrigmachendes Mittel in einer Klebemittelformulierung.

16. Klebemittelformulierung, die 20 bis 80 Gew.% eines Polymers und 80 bis 20 Gew.% eines klebrigmachenden Mittels umfaßt, wobei das klebrigmachende Mittel ein Kohlenwasserstoffharz mit einem Erweichungspunkt von 0 bis 44°C, einem durchschnittlichen Molekulargewicht (Zahlenmittel) Mₙ von 100 bis 900, einer Gardner-Farbe von 6 oder weniger und einem von Piperylen abgeleiteten Gehalt von 5 bis 50 Gew.% ist, und wobei das Harz durch die mit Aluminiumchlorid katalysierte Friedel-Crafts-Polymerisation eines Kohlenwasserstoffeinsatzmaterials, das
(a) weniger als 5 Gew.% vinylaromatische Kohlenwasserstoffe;
(b) weniger als 1 Gew.% Butadien;
(c) 10 bis 90 Gew.% Piperylenstrom und
(d) 90 bis 10 Gew.% Monoolefinkettenübertragungsmittelstrom
umfaßt, hergestellt worden ist.

17. Klebemittelformulierung nach Anspruch 16, bei der das Harz ein Erdölkohlenwasserstoffharz ist, das durch die mit Aluminiumchlorid katalysierte Polymerisation eines Kohlenwasserstoffeinsatzmaterials, das 5 bis 40 Gew.% Piperylen und 95 bis 60 Gew.% eines Kettenübertragungsmittels umfaßt, das mit Piperylen copolymerisierbar ist, hergestellt worden ist, wobei das Harz einen Erweichungspunkt von 15 bis 30°C, eine Gardner-Farbe von 3 oder weniger, ein durchschnittliches Molekulargewicht (Zahlenmittel) Mₙ von 400 bis 700 und eine Molekulargewichtsverteilung von 1,25 bis 1,35 hat.

18. Klebemittelformulierung nach Anspruch 16 oder Anspruch 17, bei der das Polymer ein Blockcopolymerkautschuk ist.

19. Klebemittelformulierung nach Anspruch 18, bei der der Blockcopolymerkautschuk hydriert worden ist.

## Revendications

1. Résine hydrocarbonée de pétrole ayant un point de ramollissement de 0-44°C, une moyenne numérique Mn du poids moléculaire de 100 à 900, une couleur Gardner égale ou inférieure à 6 et une teneur dérivée du pipérylène de 5 à 50 pour cent en poids, ladite résine étant préparée par polymérisation de Friedel-Crafts, catalysée au chlorure d'aluminium, d'une charge hydrocarbonée comprenant :
(a) moins de 5 pour cent en poids d'hydrocarbures vinyl-aromatiques ;
(b) moins de 1 pour cent en poids de butadiène ;
(c) 10 à 90 % en poids d'un courant de pipérylène ; et
(d) 90 à 10 pour cent en poids d'un courant d'agent monooléfinique de transfert de chaîne.

2. Résine suivant la revendication 1, dans laquelle l'agent monooléfinique de transfert de chaîne répond à la formule RR'=CR''R''' dans laquelle R et R' sont des groupes alkyle en C₁ à C₅ et R'' et R''' représentent H ou un groupe alkyle en C₁ à C₄.

3. Résine suivant la revendication 1 ou la revendication 2, dans laquelle l'agent de transfert de chaîne comprend le courant de produit de réaction d'oléfines à longueur de chaîne moyenne provenant de la dimérisation sélective du propylène.

4. Résine suivant la revendication 3, dans laquelle le propylène est dimérisé en présence d'un catalyseur à base d'un métal de transition.

5. Résine suivant la revendication 3 ou la revendication 4, dans laquelle le courant de produit de réaction de dimérisation contient 12 à 18 pour cent en poids de trimère de propylène en C₉.

6. Résine suivant l'une quelconque des revendications 3 à 5, dans laquelle l'agent de transfert de chaîne, produit réactionnel de dimérisation, présente les valeurs analytiques suivantes, sur une base dépourvue de trimère en C₉ :
| Composant | Plage de pourcentages en poids |
|---|---|
| 4-méthyl-1-pentène | 0,5 - 2 |
| 2,3-diméthyl-1-butène | 1 - 4 |
| cis-4-méthyl-2-pentène | 2,5 - 5 |
| trans-4-méthyl-2-pentène | 15 - 30 |
| 2-méthyl-1-pentène | 4 - 6 |
| trans-3-hexène | 4 - 7 |
| trans-2-hexène | 12 - 18 |
| 2-méthyl-2-pentène | 25 - 40 |
| cis-2-hexène | 4 - 7 |
| 2,3-diméthyl-2-butène | 3 - 7 |

7. Résine suivant l'une quelconque des revendications précédentes, dans laquelle l'agent de transfert de chaîne est présent dans la charge hydrocarbonée en proportions de 10 à 50 pour cent en poids sur la base du poids de la charge hydrocarbonée.

8. Résine suivant l'une quelconque des revendications précédentes, dans laquelle le courant de pipérylène est un concentré de pipérylène exposé à une maturation à la chaleur.

9. Résine suivant la revendication 8, dans laquelle le concentré de pipérylène exposé à une maturation à la chaleur contient 20 à 70 pour cent en poids de pipérylène sur la base du poids du concentré.

10. Résine suivant l'une quelconque des revendications précédentes, dans laquelle la charge hydrocarbonée contient moins de 1 pour cent en poids d'hydrocarbures vinyl-aromatiques.

11. Résine hydrocarbonée de pétrole produite par polymérisation, catalysée au chlorure d'aluminium, d'une charge hydrocarbonée essentiellement constituée de 5 à 40 pour cent en poids de pipérylène et de 95 à 60 % d'un agent de transfert de chaîne copolymérisable avec le pipérylène, ladite résine ayant un point de ramollissement de 0 à 44°C, de préférence de 15 à 30°C, une couleur Gardner égale ou inférieure à 3, une moyenne numérique Mn du poids moléculaire de 400 à 700 et une distribution de poids moléculaire de 1,25 à 1,35.

12. Résine suivant la revendication 11, dans laquelle le composant pipérylène représente 30 à 40 pour cent en poids de la résine.

13. Résine suivant la revendication 11 ou la revendication 12, ayant une couleur Gardner de 1-2.

14. Résine suivant les revendications 11 à 13, ayant un point de ramollissement de 20°C, une valeur Mn de 500-600 et une distribution de poids moléculaire de 1,25 à 1,35.

15. Utilisation d'une résine de pétrole suivant l'une quelconque des revendications précédentes comme agent d'adhésivité dans une formulation d'adhésif.

16. Formulation d'adhésif comprenant 20 à 80 % en poids d'un polymère et 80 à 20 % en poids d'un agent d'adhésivité, ce dernier étant une résine hydrocarbonée ayant un point de ramollissement de 0 à 44°C, une moyenne numérique Mn du poids moléculaire de 100 à 900, une couleur Gardner égale ou inférieure à 6, et une teneur dérivée du pipérylène de 5 à 50 pour cent en poids, ladite résine étant préparée par polymérisation de Friedel-Crafts, catalysée au chlorure d'aluminium, d'une charge hydrocarbonée comprenant :
(a) moins de 5 pour cent en poids d'hydrocarbures vinyl-aromatiques ;
(b) moins de 1 pour cent en poids de butadiène ;
(c) 10 à 90 % en poids d'un courant de pipérylène ; et
(d) 90 à 10 pour cent en poids d'un courant d'agent monooléfinique de transfert de chaîne.

17. Formulation adhésive suivant la revendication 16, dans laquelle la résine est une résine hydrocarbonée de pétrole produite par polymérisation, catalysée au chlorure d'aluminium, d'une charge hydrocarbonée comprenant 5 à 40 pour cent en poids de pipérylène et 95 à 60 % d'un agent de transfert de chaîne copolymérisable avec le pipérylène, ladite résine ayant un point de ramollissement de 15 à 30°C, une couleur Gardner égale ou inférieure à 3, une moyenne numérique Mn du poids moléculaire de 400 à 700 et une distribution de poids moléculaire de 1,25 à 1,35.

18. Formulation d'adhésif suivant la revendication 16 ou la revendication 17, dans laquelle le polymère est un caoutchouc copolymère séquencé.

19. Formulation d'adhésif suivant la revendication 18 dans laquelle le caoutchouc copolymère séquencé est hydrogéné.
